# FASCICULE DE BREVET EUROPEEN

(11) **EP 2 406 356 B1**
(45) Date de publication et mention de la délivrance du brevet: **25.07.2018**
(21) Numéro de dépôt: 10716382.6
(22) Date de dépôt: 11.03.2010
(51) Int. Cl.: C10M 101/02, C10M 107/02, A01N 25/02, C08K 5/01, C09D 11/02, C09K 8/02, C10G 9/00, C10G 11/00, C10G 45/58, C10G 47/00, C10L 1/04, C10L 11/04

(54) **FLUIDE HYDROCARBONE HYDRODEPARAFFINE UTILISE DANS LA FABRICATION DE FLUIDES INDUSTRIELS, AGRICOLES OU A USAGE DOMESTIQUE**
HYDROENTPARAFFINIERTES KOHLENWASSERSTOFFFLUID, DAS BEI DER HERSTELLUNG VON FLUIDEN ZUR VERWENDUNG IN INDUSTRIE, LANDWIRTSCHAFT ODER HAUSHALT VERWENDET WIRD
HYDRODEWAXED HYDROCARBON FLUID USED IN THE MANUFACTURE OF FLUIDS FOR INDUSTRIAL, AGRICULTURAL, OR DOMESTIC USE

(30) Priorité: 12.03.2009 FR 0901155
(43) Date de publication de la demande: 18.01.2012
(73) Titulaire: TOTAL MARKETING SERVICES, 92800 Puteaux (FR)
(72) Inventeur: WESTELYNCK, Antoine, F-78440 Brueil en Vexin (FR); AUBRY, Christine, F-78160 Marly le Roi (FR); WIESSLER, Achim, 49324 Melle (DE)
(74) Mandataire: Hirsch & Associés
(86) Numéro de dépôt international: PCT/FR2010/050426
(87) Numéro de publication internationale: WO 2010/103245

(56) Documents cités:
- WO-A1-2007/114505
- WO-A1-2008/123249
- WO-A1-2008/138861
- DD-A1- 258 495
- US-A- 2 346 970
- US-A- 5 374 495
- US-A- 5 833 839
- US-A1- 2005 197 256
- US-A1- 2009 014 354
- US-B1- 7 442 739
- IDEMITSU KOSAN CO., LTD (CHEMICALS DEPT: "IDEMITSU IP Solvent" INTERNET ARTICLE, [Online] pages 1-15, XP002549391 Extrait de l'Internet: URL:http://www.idemitsu-chemicals.de/files /datasheets/broschures/PerformanceChemical s/IPSolvent.pdf> [extrait le 2009-10-08]
- EXXON MOBIL CORP: "ISOPAR Paraffinic Solvents" PRODUCT INFO, [Online] 31 décembre 2007 (2007-12-31), XP002549390 Extrait de l'Internet: URL:http://www.exxon.com/USA-English/Lubes /PDS/nause2indexisopar.pdf> [extrait le 2009-10-08]
- "Adhesive composition for vulcanisation bonding - contg. gamma methacryloxy propyl:tri:alkoxy:silane, vinylÜ tri:alkoxy silane, organic aluminium cpd. and organic solvent" DERWENT, 31 décembre 1986 (1986-12-31), XP002214350
- SACHDEV K G ET AL: "SOLVENT EFFECTS IN THE APPLICATION OF SILANE COUPLING AGENTS FOR POLYIMIDE-SILICON OXIDE ADHESION - PEEL STRENGTH AND XPS STUDIES" PROCEEDINGS OF THE ELECTRONIC COMPONENTS CONFERENCE. SEATTLE, MAY 5 - 7, 1986; [PROCEEDINGS OF THE ELECTRONIC COMPONENTS CONFERENCE], NEW YORK, IEEE, US, vol. CONF. 36, 1 mai 1986 (1986-05-01), pages 345-354, XP000842364

## Description

La présente invention concerne un fluide hydrocarboné hydrodéparaffiné, utilisable dans la composition de fluides industriels, agricoles et à usage domestique. Parmi ceux-ci, on distingue des fluides de forage, des lubrifiants pour l'industrie y compris l'automobile, des produits phytosanitaires, des encres, des combustibles pour applications domestiques, des huiles d'extension pour les mastics, des abaisseurs de viscosité pour formulations à base de résine, des compositions pharmaceutiques et des compositions pour contact alimentaire.

La nature chimique et la composition des fluides connus de l'homme du métier varient considérablement selon l'application envisagée. Ainsi, l'intervalle de distillation mesuré par l'ASTM D-86 ou l'ASTM D-1160 (choix selon le point final de distillation demandé en dessous ou au dessus de 365°C), le point d'écoulement, la viscosité, la densité, les teneurs en soufre et en aromatiques, la densité, le Point d'aniline mesuré par ASTMD-611, le mode de production de ces hydrocarbures, notamment la nature de la matière première distillée en coupes, et le point éclair constituent des caractéristiques importantes qui permettent de les adapter à ces différentes applications.

Ces fluides hydrocarbonés ont souvent des gammes de points d'ébullition étroites entre le Point initial de distillation (IBP) et le Point final de distillation (FBP). Ces gammes sont choisies en fonction de l'application envisagée. L'étroitesse de celles-ci permet de disposer d'un point d'inflammation et/ou point Eclair précis, paramètre important pour des raisons de sécurité. Une gamme de coupe étroite permet en outre d'obtenir une viscosité mieux définie, une stabilité améliorée de celle-ci et des caractéristiques d'évaporation adaptées aux applications nécessitant une étape de séchage de durée contrôlée: elle favorise également l'obtention de coupes hydrocarbonées de tension de surface mieux définie, dont le point d'aniline et le pouvoir solvant sont plus précis. Cependant ce n'est pas toujours nécessaire et d'autres caractéristiques sont à privilégier.

La purification consiste typiquement en étapes d'hydrodésulfuration et/ou d'hydrogénation pour réduire la teneur en soufre et/ou éliminer les hydrocarbures aromatiques et/ou cycles non saturés en les transformant en naphtènes. Les fluides hydrocarbonés ainsi purifiés sont majoritairement aliphatiques, ils contiennent des paraffines, des isoparaffines et des naphtènes. Si un fluide désaromatisé est exigé, le produit hydrocarboné qui a été hydrodésulfuré, puis fractionné peut être hydrogéné pour saturer la totalité des hydrocarbures aromatiques qui sont présents. L'hydrogénation peut aussi être réalisée avant le fractionnement final.

Actuellement, les utilisateurs recherchent essentiellement des fluides hydrocarbonés contenant de faibles concentrations en hydrocarbures aromatiques et des teneurs en soufre extrêmement faibles, dont les coupes ont des points initiaux de distillation plus élevés pour tenir compte des conditions environnementales ou de sécurité.

Les procédés dans lesquels un gazole de distillation direct sous pression atmosphérique est d'abord hydrotraité, permettent d'atteindre des coupes dont le Point final de distillation (FBP) est de 320°C. La recherche de points finaux d'ébullition plus élevés, par exemple supérieurs à 350°C favorise la formation de coupes distillées de teneurs en soufre plus élevées et dont la teneur en hydrocarbures aromatiques est plus élevée. La présence de tels composés dans les hydrocarbures a des effets nocifs sur les catalyseurs d'hydrogénation dont la durée de vie est raccourcie. Parfois, un traitement complémentaire d'hydrogénation est nécessaire pour diminuer encore la teneur en soufre de ces produits. Ainsi, le traitement de ces coupes grève notablement l'économie des procédés d'hydrogénation en augmentant considérablement la consommation d'hydrogène et les coûts de renouvellement du catalyseur qui se désactive rapidement.

Maintenant, ces fluides hydrocarbonés doivent en outre présenter un bon compromis entre une viscosité élevée et de bonnes propriétés à froid, c'est-à-dire un point de congélation très bas, par exemple inférieur à -20°C, un pouvoir solvant élevé, notamment pour l'application encre d'imprimerie nécessitant la dissolution de résines, mais aussi des composés visqueux ou solides entrant dans la composition des fluides de forage. Ces fluides hydrocarbonés utilisés comme huiles d'extension pour la fabrication des mastics à base de silicone doivent présenter une bonne compatibilité avec les polymères siliconés et aussi pouvoir abaisser la viscosité de certains polymères comme les polymères de chlorures de polyvinyl ou PVC lorsqu'ils sont utilisés dans la fabrication des pâtes PVC ou Plastisols.

Il est également connu d'obtenir ces fluides à partir de composés issus de la distillation sous vide, notamment de gazoles sous vide ou vapocraqués qui peuvent alors être soumis à d'autres procédés comme le craquage catalytique couplé à une hydrogénation (hydrodésulfuration, hydrodésaromatisation) comme il est décrit dans le brevet EP1447437 ou encore par hydrocraquage couplé à une hydrogénation, tels que décrits dans les brevets WO03/074634 et WO03/074635. Ces procédés d'hydrocraquage ou de craquage catalytique favorisent la concentration d'aromatiques, notamment d'aromatiques polycycliques dans les coupes 200 à 450°C en sortie de ces unités, ces aromatiques se transformant en naphtènes plus particulièrement en naphtènes polycycliques très concentrés par hydrogénation.

Cependant, les exigences en nouveaux fluides moins toxiques ou moins volatils de viscosité faible ont conduit les industriels du domaine à rechercher de nouvelles bases pour fabriquer ces fluides.

Pour rappel, les fluides hydrocarbonés recherchés doivent satisfaire certaines spécifications en terme de pureté; la teneur en soufre mesurée par ASTM D-5453 ne doit pas excéder 10 ppm, de préférence 5 ppm et fréquemment ne pas dépasser 1 ppm. Classiquement, les fluides hydrocarbonés doivent être faiblement concentrés en hydrocarbures aromatiques et être constitués de coupes présentant un point final d'ébullition supérieur à 320°C.

Pour diversifier les bases utilisables comme fluides hydrocarbonés, la demanderesse a choisi d'utiliser des coupes hydrocarbonées issues d'unités d'hydrodéparaffinage de différentes coupes gazoles issues d'autres unités de raffinage et de les distiller pour en faire des fluides hydrodéparaffinés aux intervalles de coupe appropriés, éventuellement après leur avoir fait subir des traitements de purification en vue de l'élimination du soufre et des hydrocarbures aromatiques. Dans la suite de la présente description, ces fluides hydrocarbonés seront appelés fluides hydrocarbonés déparaffinés distillés ou plus simplement fluides hydrodéparaffinés.

La présente invention a donc pour objet un fluide hydrocarboné utilisable dans la composition de produits industriels, agricoles ou à usage domestique, de point d'écoulement inférieur à -15°C selon la norme ASTM D97, de points d'ébullition initial et final compris entre 280 et 380 °C, contenant plus de 60% en poids d'isoparaffines, moins de 10% en poids de normales paraffines, et contenant moins de 500 ppm d'aromatiques, déterminé par spectrométrie UV et de 20 à moins de 40% en poids de naphtènes et constitué d'un mélange d'hydrocarbures obtenu par distillation de coupes gazoles hydrodéparaffinées de température d'ébullition supérieure à 200°C.

L'invention concerne des fluides hydrocarbonés dont la température d'ébullition est comprise entre 280 et 325°C.

Le point d'écoulement de chacun des fluides est inférieur à - 30°C selon la norme ASTM D 97.

La teneur en soufre est inférieure à 10 ppm, de préférence inférieure à 2 ppm.

Chaque fluide contient moins de 500 ppm d'aromatiques, teneur déterminée par spectrométrie UV.

Le fluide hydrocarboné est issu de l'hydrodéparaffinage de coupes de type gazoles obtenues par distillation atmosphérique, distillation sous vide, hydrotraitement, hydrocraquage, craquage catalytique et/ou viscoréduction, éventuellement après un traitement
de désulfuration et/ou de désaromatisation complémentaire.

Dans un premier mode pour les fluides de température d'ébullition comprise entre 280 et 380°C, la viscosité est supérieure à 5 mm²/s à 40°C, et de préférence supérieure à 7mm²/s à 40°C, selon la norme ASTM D445.

Ces fluides comprennent généralement moins de 65% en poids d'hydrocarbures ayant une longueur de chaîne comprise entre 16 et 22 atomes de carbone, et plus de 30% en poids d'hydrocarbures ayant une longueur de chaîne supérieure à 22 atomes de carbone de préférence de chaîne de C22 à C30.

De préférence, chacun de ces fluides comprend moins de 50% en poids d'hydrocarbures ayant une longueur de chaîne comprise entre 16 et 22 atomes de carbone, et plus de 40% en poids d'hydrocarbures ayant une longueur de chaîne supérieure à 22 atomes de carbone, de préférence de chaîne comprise entre C22 et C30. En outre, ils sont dépourvus de normales paraffines.

Dans un second mode de réalisation, les fluides de température d'ébullition comprise entre 380 et 325°C, ont une viscosité inférieure à 3,5 mm²/s à 40°C, selon la norme ASTM D445 et ne contiennent pas d'hydrocarbures de chaîne carbonée supérieure à C22.

Les fluides non hydrodéparaffinés sont issus de coupes hydrocraquées ou hydrotraitées comprises entre 200 et 400°C, d'intervalle de coupe inférieur ou égal à 70°C, et de teneur en naphtènes supérieure à 40 % en poids.

Les fluides hydrocarbonés non hydrodéparaffinés peuvent également être issus de gazoles fortement hydrotraités de coupes de distillation comprise entre 200 et 350°C et de teneur en soufre inférieure à 10 ppm,

L'invention concerne également l'utilisation d'au moins un fluide hydrodéparaffiné comme solvant dans des compositions de produits industriels.

L'invention concerne l'utilisation d'au moins un fluide hydrodéparaffiné ou d'une composition de coupes de températures d'ébullition comprises entre 280 et 350°C, comme fluide de forage entrant dans la composition des boues.

Selon l'invention, les fluides hydrocarbonés hydrodéparaffinés sont utilisables dans la composition de produits industriels. Ils ont un point d'écoulement inférieur à -15°C selon la norme ASTM D97, leurs points d'ébullition initial et final sont compris entre 280 et 380 °C. Ils contiennent plus de 60% en poids d'isoparaffines, moins de 10% en poids de normales paraffines et une concentration en naphtènes de 20 à moins de 40% en poids. Ils sont constitués d'un mélange d'hydrocarbures obtenu par distillation de coupes gazoles hydrodéparaffinées de température d'ébullition supérieure à 200°C.

Par produits industriels, on entend des fluides de forage, des lubrifiants pour l'industrie y compris l'automobile, des encres, des huiles d'extension pour les mastics, des abaisseurs de viscosité pour formulations à base de résine.

Par produits agricoles et à usage domestique, on entend des compositions pharmaceutiques, des produits phytosanitaires, des combustibles pour applications domestiques, et des compositions pour contact alimentaire.

Ces fluides sont composés essentiellement d'hydrocarbures hydrodéparaffinés de coupe comprise entre 280°C et 325°C.

Leur point d'écoulement selon la norme ASTM D97 est de préférence inférieur à -30°C.

Ces fluides selon l'invention présentent une teneur en soufre inférieure à 10 ppm, de préférence inférieure à 2 ppm et moins de 500 ppm d'aromatiques, teneur déterminée par spectrométrie UV.

Ces fluides hydrocarbonés sont obtenus par hydrodéparaffinage de coupes de type gazoles obtenues par distillation atmosphérique, distillation sous vide, hydrotraitement, hydrocraquage, craquage catalytique et/ou viscoréduction, éventuellement après un traitement de désulfuration et/ou de désaromatisation complémentaire en vue de leur purification aux fins de satisfaire les caractéristiques de teneur en soufre et de teneur en hydrocarbures aromatiques requises.

Contrairement aux fluides hydrocraqués, les fluides utilisés ont une teneur en naphtènes inférieure à 40% en poids, et contiennent plus de 60 % en poids d'isoparaffines. Les teneurs moyennes en naphtènes varient de 20 à moins de 40% en poids.

De préférence, les fluides selon l'invention contiennent plus de 65 % en poids d'isoparaffines et moins de 10 % en poids de normales paraffines.

En outre, ces fluides comprennent moins de 65% en poids d'hydrocarbures ayant une longueur de chaîne comprise entre 16 et 22 atomes de carbone, et plus de 30% en poids d'hydrocarbures ayant une longueur de chaîne supérieure à 22 atomes de carbone. Plus particulièrement, sont préférés des fluides comprenant moins de 50% en poids d'hydrocarbures ayant une longueur de chaîne comprise entre 16 et 22 atomes de carbone, et plus de 40% en poids d'hydrocarbures ayant une longueur de chaîne supérieure à 22 atomes de carbone. Dans ce mode préféré, le fluide est quasi dépourvu de normales paraffines.

Contrairement aux fluides de température d'ébullition comprise entre 280 et 450°C, les fluides selon l'invention de température d'ébullition comprise entre 280 et 325°C présentent une viscosité selon la norme ASTM D445 inférieure à 3,5 mm²/s à 40°C, et ne contiennent pas d'hydrocarbures de chaîne carbonée supérieure à C22.

Contrairement aux fluides de l'art antérieur, on ne cherche pas des coupes de distillation étroites, mais plutôt des coupes présentant un compromis entre une viscosité élevée et un point d'écoulement très bas. Ces fluides sont particulièrement avantageux en ce que leur point d'écoulement est toujours inférieur à -30°C favorisant ainsi leur utilisation à froid. Cette caractéristique les rend particulièrement adaptés aux applications où la température de stockage et de mise en oeuvre peut être très faible.

Parmi les fluides non hydrodéparaffinés sont visés les fluides obtenus par hydrocraquage et hydrotraitement de coupes de distillation comprise entre 200 et 400°C d'intervalle de coupe inférieur ou égal à 70°C et de teneur en naphtènes supérieure à 40 % en poids et de préférence supérieure à 60% en poids.

D'autres fluides pour ces mêmes applications cités précédemment, sont constitués de gazoles fortement hydrotraités de coupes de distillation comprises entre 200 et 350°C, de teneur en soufre inférieure à 10 ppm, et de teneur en aromatiques inférieure à 0,1% en poids.

Ces fluides hydrocarbonés peuvent provenir du raffinage des sources d'hydrocarbures fossiles mais aussi d'hydrocarbures d'origine végétale ou animale qui sont soumis à des traitements de fractionnement et de purification et dont les intervalles et coupes de distillation correspondent à ceux des fluides obtenus à partir d'hydrocarbures d'origine fossile.

Ces fluides hydrocarbonés ou les compositions qui les contiennent peuvent ainsi être utilisés dans la formulation des fluides de forage, des lubrifiants industriels, des fluides pour le travail des métaux, des produits phytosanitaires, destinés notamment au traitement des maladies pour certaines cultures, des encres, des huiles colorées ou non, parfumées ou non utilisées dans les lampes à huile ou les torches de jardin, dans les formulations utilisées comme combustible pour les équipements domestiques tels que les barbecues et aussi comme huiles d'extension dans la composition des mastics par exemple siliconés et comme des abaisseurs de viscosité dans des formulations de polychlorure de vinyle (PVC).

Ainsi, les fluides hydrocarbonés hydrodéparaffinés de coupes de distillation comprises entre 280 et 325°C ou composition de fluides sont utilisés dans la composition des fluides de forage. Ils peuvent constituer la phase organique d'une boue de forage constituée d'une émulsion huile/phase aqueuse dans laquelle divers additifs spécifiques à l'application sont ajoutés.

Pour les applications offshores ou onshores, les fluides de forage doivent présenter une biodégradabilité acceptable, une bonne éco-toxicité et une faible bioaccumulation. Pour ces applications le fluide doit présenter généralement une viscosité de moins de 3,5 mm²/s à 40°C, un point éclair de plus de 100°C et, un point d'écoulement de - 40°C ou moins pour des applications « thermofrost ». De telles propriétés n'étaient accessibles qu'en utilisant des fluides synthétiques chers comme les polyalphaoléfines hydrogénées, les oléfines internes non saturées, les alphaoléfines linéaires et les esters.

Les fluides hydrocarbonés hydrodéparaffinés de coupes de distillation comprises entre 280 et plus de 450°C ou composition de fluides sont utilisés dans la composition de produits phytosanitaires, notamment comme vecteur solvant permettant la pulvérisation sur les arbres fruitiers et les champs de cultures.

Les fluides hydrocarbonés hydrodéparaffinés de coupe de distillation comprises entre 280 et 450°C, de préférence entre 290 et 380°C ou composition de fluides sont également utilisés comme huile lubrifiante pour le travail des métaux, quelle que soit la largeur de coupe.

On peut également utiliser les fluides de coupes de distillation comprises entre 280°C et 380°C ou composition de fluides comme solvant pour des résines et/ou des polymères, la composition finale comprenant de 5 à 95 % en poids du dit fluide selon l'invention. Le pouvoir solvant du fluide ou de la composition qui le contient permet notamment son utilisation pour l'abaissement de la viscosité et la liquéfaction des résines telles que des résines a) thermoplastique acrylique; b) acrylique-thermodurcissable; c) du caoutchouc chloré; d) des époxydes (en une ou deux parties); e) hydrocarbures (e. g., oléfines, résines de terpène, esters de colophane, résines de pétrole, indène de coumarone, butadiène de styrène, styrène, styrène de méthyle, vinyltoluène, polychlorobutadiène, polyamide, polychlorure de vinyle et isobutylène); f) phénolique; g) polyester et alkyd; h) polyuréthane; i) silicone; j) urée; et, k) polymères de vinyle et acétate de polyvinyle.

Plus particulièrement, le fluide hydrocarboné ou composition de fluides de coupe d'intervalle de distillation compris entre 280 et 380°C, de préférence compris entre 300 et 350°C est avantageux dans la composition des mastics silicones ou adhésifs siliconés, produits pour lesquels il est fortement recommandé de disposer de produits résistant au froid.

En outre, le fluide hydrocarboné ou composition de fluides de coupe de distillation compris entre 290°C et 380°C, de préférence entre 330 et 380°C est utilisés dans les formulations à base de polymères, notamment de PVC (appelées Plastisol) pour l'obtention de matériaux de construction ou de décoration tels que revêtements de sols, de mastics, de simili cuir, de papiers peints et pour l'enduction de fils ou de textiles (stores, voiles de bateaux ou de bâches...).

Des fluides hydrocarbonés de coupes de distillation comprises entre 290°C et 380°C ou composition de fluides sont particulièrement intéressants dans la fabrication des encres à journaux Offset dites « coldset », en mélange avec des composés bitumineux fortement oxydés et très durs, des compositions préférées pouvant comprendre plus de 45% en poids de composés bitumineux et plus de 40% en poids de ces fluides.

Ces fluides hydrocarbonés peuvent également être utilisés comme combustibles domestiques seuls (lampes à huile, torches de jardin) ou en combinaison avec d'autres composés dans les liquides, gels ou briquettes utilisés pour allumer les barbecues.

Pour ces dernières applications, on utilise des mélanges d'au moins un fluide d'intervalle de coupe de distillation compris entre 280 et 380°C avec au moins un fluide hydrocarboné de point éclair inférieur à 100°C, ces mélanges présentant une viscosité supérieure à 7 mm²/s selon ASTM D445. Ils sont utilisés en l'état ou servent de base combustible pour usage domestique. Ils ont la particularité d'éviter l'étiquetage R65 (« Nocif, peut provoquer une atteinte aux poumons en cas d'ingestion »).

Les avantages de la présente invention sont décrits dans les exemples suivants ci après, à titre illustratif et non limitatif de l'invention.

### EXEMPLE 1

Le présent exemple décrit les différents fluides hydrodéparaffinés utilisables et leurs caractéristiques en mélange avec des fluides classiques.

Ainsi, le tableau 1 ci-après regroupe les fluides hydrodéparaffinés utilisables selon l'invention référencés Di et des fluides classiques avec lesquels ils peuvent être utilisés en mélange, ces fluides étant référencés Ti. Les propriétés intrinsèques de chaque fluide y sont mentionnées. Ces fluides peuvent aussi être utilisés dans des applications phytosanitaires (D4), forage (D5) ou mastics (D6)

**TABLEAU 1**

| | **Méthode d'essai** | **Unité** | **T1** | **T2** | **T3** | **T4** | **D1** | **D2** | **D3** | **D4** | **D5** | **D6** |
|---|---|---|---|---|---|---|---|---|---|---|---|---|
| Point initial de distillation | ASTM D86 | °C | 182 | 233 | 201 | 305 | 289 | 334 | 295 | 305 | 225 | 301 |
| Point final de distillation | ASTM D86 | °C | 216 | 264 | 239 | 347 | 373 | 378 | 380 | 380 | 325 | 348 |
| Intervalle de distillation | | °C | 34 | 31 | 38 | 42 | 84 | 44 | 85 | 75 | 100 | 47 |
| | | | | | | | | | | | | |
| Viscosité à 20°C | ASTM D445 | mm²/s | 1,7 | 3,3 | 2,4 | 11 | 17,7 | 21,4 | 13,0 | | 3.8 | |
| Viscosité à 40°C | ASTM D445 | mm²/s | | 2,3 | 1,7 | 6,1 | 7,7 | 10,6 | 7,1 | 8.5 | 2.5 | 6,1 |
| Point d'écoulement | ASTM D97 | °C | <-30 | <-20 | <-30 | -2 | -42 | -35 | -18 | -36 | -36 | -48 |
| Point Éclair | ASTM D93 | °C | 65 | 103 | 76 | 159 | 149 | 175 | 151 | 157 | 99 | 158 |
| Densité à 15°C | ASTM D4052 | kg/m³ | | | | 815 | 823 | 825 | 822 | 824 | 801 | 820 |
| | | | | | | | | | | | | |
| répartition des carbones | ASTM D2887 | %pds | | | | | | | | | | |
| <C16 (C11-C15) | | | 100 | 94 | 100 | 0 | 8,0 | 0,5 | 4,1 | 0.1 | 61.4 | 2,5 |
| C16-C22 | | | 0 | 6 | 0 | 90,1 | 48,8 | 20,7 | 62,8 | 44.6 | 38.6 | 81,9 |
| >C22 (C23-C30) | | | 0 | 0 | 0 | 9.9 | 43.2 | 78.8 | 33.1 | 55.3 | 0 | 15,6 |
| | | | | | | | | | | | | |
| Composition | GC MS | %pds | | | | | | | | | | |
| isoalcanes | | | 24,9 | 30,5 | 26,8 | 59,0 | 73,1 | 65,7 | 69,5 | 75.5 | 62,6 | 62,2 |
| n alcanes | | | 21,3 | 24,0 | 5,3 | 8,3 | 0 | 0 | 5,5 | 0 | 9.7 | 0 |
| cycloalcanes | | | 53,8 | 45,5 | 67,9 | 32,7 | 26,9 | 34,3 | 25,0 | 24.5 | 27.7 | 37,8 |
| aromatiques | | | 0 | 0 | 0 | 0 | 0 | 0 | 0 | 0 | 0 | 0 |

| | | | | | | | | | | | | |
|---|---|---|---|---|---|---|---|---|---|---|---|---|
| D3 est un mélange de 70% D1 et de 30% T4. D5 est un fluide de référence. | | | | | | | | | | | | |

### EXEMPLE 2

Cet exemple présente les caractéristiques des produits obtenus avec les fluides isodéparaffinés Di pris seuls ou en mélange avec des fluides classiques Ti.

### Composition combustible pour application lampe à huile

84,4% de D2 est mélangé à 15,6% de T3 donne un produit de viscosité cinématique à 40°C de 7,2 mm²/s utilisé comme combustible pour lampe à huile ou comme base pour la fabrication d'allume barbecue sous forme de gels ou blocs solides.

Le mélange n'est pas étiqueté R65 grâce à sa viscosité supérieure à 7 mm²/s à 40°C.

### Composition d'encre pour application Encres Coldset :

### Composition d'encre pour application Encres Coldset :

La solution obtenue par mélange de 42% de D1, de 54% d'un bitume oxydé de type B1 (de caractéristiques données dans le tableau 2 ci-dessous) et d'une huile aromatique lourde de type H1 est utilisée dans la formulation d'une encre noire à journaux coldset. Les caractéristiques de la solution de bitume obtenue (SB1) utilisée dans les encres, sont données dans le tableau 3 ci après comparativement à des produits de référence (Ri) couramment utilisés dans cette même application mais formulé à base d'huile de type naphténique.

**TABLEAU 2**

| | Unité | Méthode | H1 | B1 |
|---|---|---|---|---|
| Pénétration à 25°C | 1/10 mm | EN 1426 | - | 0-6 |
| Température bille anneau | °C | EN 1427 | - | 90-100 |
| Point Eclair COC | °C | EN ISO 2592 | 303 | 300 |
| Masse volumique à 25°C | Kg/m3 | EN ISO 3838 | 1002 | 1060 |
| Viscosité à 100°C | mm²/s | ISO 3104 | 75 | |
| Point d'aniline | °C | ISO 2977 | 59 | |

**TABLEAU 3**

| Caractéristique | Unité | Méthode | R1 | R2 | R3 | SB1 |
|---|---|---|---|---|---|---|
| Viscosité | mPa.s | Duke 25°C 2500s-1 | 11.8 | 13.5 | 11.2 | 11.5 |
| Tack | | Tackometer 0.4 ml, 30°C, 100m/min après 1 minute | 140 | 145 | 141 | 144 |
| | | Après 20 minutes | 157 | 160 | 161 | 157 |
| Viscosité à faible cisaillement | Pa.s | 20°C | 220 | 123 | 60 | 100 |
| Formation de brouillard | 0 = mauvais | 40°C 0.5cc tackometer | 5 | 5 | 6 | 5 |
| | 10 = correct | | | | | |
| Opacité | 0 = mauvais | Visuelle | 5 | 3 | 1 | 3 |
| | 10 = correct | | | | | |

### Composition lubrifiante pour le travail des métaux :

Dans cette composition, on introduit 83% de lubrifiant en présence de 7% en poids d'un ensemble d'additifs de performance composé d'un anti usure ZnDTP en mélange avec un composé sulfurisé de type sulfide, un additif extrême pression de type sulfonate de calcium, un détergent surbasé de type sulfonate de calcium, un agent d'adhésivité, un inhibiteur de corrosion du cuivre et enfin un antimousse. Le tableau 4 ci-après rassemble les résultats obtenus en terme de performances, la viscosité n'étant pas ajustée pour un grade particulier. On constate que D1 et D3 donnent de bonnes performances antiusures et extrême pression, et un moussage plus faible que celui observé avec les huiles paraffiniques ou naphténiques.

**TABLEAU 4**

| Characteristiques | méthode | Unités | D1 | D2 | T5 | T6 | T7 |
|---|---|---|---|---|---|---|---|
| KV 40°C | ISO 3104 | mm²/s | 10,46 | 9,84 | 11,11 | 10,1 | 20,75 |
| KV100°C | ISO 3104 | mm²/s | 2,91 | 2,81 | 2,80 | 2,81 | 4,36 |
| Test 4 billes « usure » diamètre moyen d'usure | ASTM D4172 | mm | 0,41 | 0,38 | 0,45 | 0,42 | 0,37 |
| Test 4 Billes « extrême pression » | ASTM D2783 | | | | | | |
| Dernière charge avant grippage | | kg | 100 | 100 | 63 | 80 | 126 |
| Charge de soudure | | kg | 500 | 500 | 400 | 500 | 620 |
| LWI : (indice d'usure sous charge) | | kg | 87 | 84 | 69,5 | 84 | 98 |
| Moussage séquence I | ISO 6247 | ml/ml | 50/0 | 90/0 | >600 | 30/0 | >500/0 |

| | | | | | | | |
|---|---|---|---|---|---|---|---|
| T5= huile naphténique, T6= Huile minérale blanche, T7= huile 85NS | | | | | | | |

### Composition de mastics siliconés

Dans le présent exemple, on décrit l'utilisation de diluants selon l'invention dans les mastics silicones, particulièrement dans les mastics silicones RTV-1 (Room Temperature Vulcanisable - 1 component ou en français : mastics réticulables à température ambiante - mono composant).

Dans le tableau ci-après est donnée la composition typique de ce type de mastic (% poids) :

| | |
|---|---|
| Polymère silicone | 51,15% |
| Plastifiant | 34,10% |
| huile silicone | qsp |
| solvant hydrocarboné | HC% |
| Agent de réticulation | 4,74% |
| silice | 10,00% |
| catalyseur | 0,01% |

Dans cette composition, le rapport polymère/plastifiant est de 1,5/1 et la somme solvant hydrocarboné (HC%) + huile silicone (qsp) est égale à 34,1% poids.

Dans le tableau 5 ci-après, on fait varier le taux de solvant hydrocarboné de 10 à 20% poids puis on applique un cordon de mastic sur un papier absorbant, le mastic réticulé est ainsi stocké à basse température (+5°C) pendant une semaine, on observe ensuite le papier absorbant et notamment autour du cordon de mastic, la présence éventuelle d'une auréole qui traduit un ressuage du solvant hydrocarboné et donc une mauvaise compatibilité avec le polymère.

**TABLEAU 5**

| Teneur en solvant hydrocarboné (HC) | 10 % | 15 % | 20 % |
|---|---|---|---|
| T4 | Faible ressuage | Ressuage important | Ressuage important |
| D6 | Absence de ressuage | Absence de ressuage | Absence de ressuage |
| D7= 40%T4+60%D6 | Absence de ressuage | Absence de ressuage | Très faible ressuage |

Ces essais sont répétés avec une teneur de 20% poids en solvant hydrocarboné à une température de -18°C, les résultats présentés dans le tableau 6 sont obtenus :

**TABLEAU 6**

| Teneur en solvant hydrocarboné (HC) | 20 % |
|---|---|
| T4 | Ressuage très important |
| D6 | Très faible ressuage |
| D7 | Faible ressuage |

Les résultats comparatifs entre les fluides D6 et D7 au sens de l'invention (point d'écoulement -48°C et -20°C) et un fluide T4 de l'art antérieur (point d'écoulement +2°C) montrent clairement un plus faible ressuage des solvants hydrocarbonés D6 et D7 traduisant une meilleure compatibilité avec le polymère, les trois fluides D6, D7 et T4 présentant une plage de distillation, une viscosité à 40°C similaires.

## Revendications

1. Fluide hydrocarboné utilisable dans la composition de produits industriels, agricoles ou à usage domestique, de point d'écoulement inférieur à -15°C selon la norme ASTM D97, de températures d'ébullition initiale et finale comprises entre 280 et 380°C, contenant plus de 60% en poids d'isoparaffines, moins de 10 % en poids de normales paraffines, et contenant moins de 500 ppm d'aromatiques, déterminé par spectrométrie UV et de 20 à moins de 40% en poids de naphtènes, et constitué d'un mélange d'hydrocarbures obtenu par distillation de coupes gazoles hydro déparaffinées d'origine fossile de température d'ébullition supérieure à 200°C.

2. Fluide selon la revendication 1, **caractérisé en ce que** sa température d'ébullition est comprise entre 280 et 325°C.

3. Fluide selon l'une des revendications précédentes, **caractérisé en ce que** son point d'écoulement est inférieur à - 30°C selon la norme ASTM D 97.

4. Fluide selon l'une des revendications précédentes, **caractérisé en ce que** sa teneur en soufre est inférieure à 10 ppm, de préférence inférieure à 2 ppm.

5. Fluide selon l'une des revendications précédentes, **caractérisé en ce qu'**il est issu de l'hydrodéparaffinage de coupes de type gazoles obtenues par distillation atmosphérique, distillation sous vide, hydrotraitement, hydrocraquage, craquage catalytique et/ou viscoréduction, éventuellement après un traitement de désulfuration et/ou de désaromatisation complémentaire.

6. Fluide selon l'une des revendications 1 à 5, **caractérisé en ce qu'**il est dépourvu de normales paraffines, et la viscosité des fluides de température d'ébullition comprise entre 280 et 380°C est supérieure à 5 mm²/s à 40°C, de préférence supérieure à 7 mm²/s à 40°C, selon la norme ASTM D445.

7. Fluide selon l'une des revendications 1 à 5, **caractérisé en ce que** la viscosité des fluides de température d'ébullition comprise entre 280 et 325°C est inférieure à 3,5 mm²/s à 40°C, selon la norme ASTM D445 et **en ce qu'**il ne contient pas d'hydrocarbures de chaînes carbonées supérieure à C22.

8. Utilisation d'au moins un fluide hydrocarboné selon l'une des revendications 1 à 7 comme solvant dans des compositions de produits industriels.

9. Utilisation d'au moins un fluide hydrocarboné selon l'une des revendications 1 à 7, comme fluide de forage ou dans la composition de boue de forage, ledit fluide hydrocarboné ayant une température d'ébullition comprise entre 280 et 350°C.

## Patentansprüche

1. Kohlenwasserstofffluid, verwendbar in der Zusammensetzung von Industrieprodukten, landwirtschaftlichen Produkten oder Haushaltsprodukten, mit einem Stockpunkt der niedriger als -15°C gemäß der ASTM-Norm D97 ist, mit, im Bereich von 280 und 380°C liegenden Siedetemperaturen, enthaltend mehr als 60 Gewichts-% Isoparaffine, weniger als 10 Gewichts-% Normalparaffine und weniger als 500 ppm Aromaten, durch UV-Spektrometrie bestimmt, und zwischen 20 und weniger als 40 Gewichts-% Naphthene und bestehend aus einem, durch die Destillation hydroentparaffinierter Gasölschnitte fossilem Ursprungs gewonnenen Kohlenwasserstoffgemisch mit einer Siedetemperatur die höher als 200°C ist.

2. Fluid nach Anspruch 1, **dadurch gekennzeichnet dass** dessen Siedetemperatur im Bereich von zwischen 280 und 325°C liegt.

3. Fluid nach einem der vorangehenden Ansprüche, **dadurch gekennzeichnet dass** dessen Stockpunkt niedriger als -30°C gemäß der ASTM-Norm D97 ist.

4. Fluid nach einem der vorangehenden Ansprüche, **dadurch gekennzeichnet dass** dessen Schwefelgehalt kleiner als 10 ppm, vorzugsweise kleiner als 2 ppm ist.

5. Fluid nach einem der vorangehenden Ansprüche, **dadurch gekennzeichnet dass** es der Hydroentparaffinierung von Schnitten des Gasöltyps entstammt die durch atmosphärische Destillation, Vakuumdestillation, Hydrobehandlung, Hydrokracken, katalytisches Kracken und/oder Visbreaking erhalten wurden, gegebenenfalls nach einer Entschwefelungsbehandlung und/oder einer zusätzlichen Entaromatisierung.

6. Fluid nach einem der Ansprüche 1 bis 5, **dadurch gekennzeichnet dass** es frei von Normalparaffinen ist und dass die Viskosität der Fluide mit einer, im Bereich von zwischen 280 und 380°C liegenden Siedetemperatur größer als 5 mm²/s bei 40°C, vorzugsweise größer als 7 mm²/s bei 40°C gemäß der ASTM-Norm D445 ist.

7. Fluid nach einem der Ansprüche 1 bis 5, **dadurch gekennzeichnet dass** die Viskosität der Fluide mit einer, im Bereich von zwischen 280 und 325°C liegenden Siedetemperatur kleiner als 3,5 mm²/s bei 40°C gemäß der ASTM-Norm D445 ist, und dass es keine Kohlenwasserstoffe mit Kohlenstoffketten enthält die größer als C22 sind.

8. Verwendung mindestens eines Kohlenwasserstofffluids nach einem der Ansprüche 1 bis 7 als Lösungsmittel in Zusammensetzungen von Industrieprodukten.

9. Verwendung mindestens eines Kohlenwasserstofffluids nach einem der Ansprüche 1 bis 7 als Bohrflüssigkeit oder in der Zusammensetzung von Bohrschlamm, wobei das Kohlenwasserstofffluid eine, im Bereich von zwischen 280 und 325°C liegende Siedetemperatur aufweist.

## Claims

1. Hydrocarbon fluid which can be used in the composition of industrial and agricultural products, or products for domestic use, with a pour point of less than -15°C according to ASTM standard D97, initial and final boiling points comprised between 280 and 380°C, containing more than 60% by weight isoparaffins, less than 10% by wt. of normal paraffins, and containing less than 500 ppm of aromatics determined by UV spectroscopy and between 20 and less than 40% by weight of naphthenes, and constituted by a mixture of hydrocarbons obtained by distillation of hydrodewaxed gas-oil cuts of fossil origin with a boiling point greater than 200°C.

2. Fluid according to claim 1, **characterized in that** its boiling point is comprised between 280 and 325°C.

3. Fluid according to one of the preceding claims, **characterized in that** its pour point is less than - 30°C according to ASTM standard D 97.

4. Fluid according to one of the preceding claims, **characterized in that** its sulphur content is less than 10 ppm, preferably less than 2 ppm.

5. Fluid according to one of the preceding claims, **characterized in that** it originates from the hydrodewaxing of gas-oil type cuts obtained by atmospheric distillation, vacuum distillation, hydrotreatment, hydrocracking, catalytic cracking and/or visbreaking, optionally after an additional treatment of desulphurization and/or supplementary removal of aromatics.

6. Fluid according to one of claims 1 to 5, **characterized in that** it is devoid of normal paraffins and the viscosity of the fluids with a boiling point comprised between 280 and 380°C, is greater than 5 mm²/s at 40°C, and preferably greater than 7mm²/s at 40°C, according to ASTM standard D445.

7. Fluid according to one of claims 1 to 5 **characterized in that** the viscosity of the fluids with a boiling point comprised between 280 and 325°C is less than 3.5 mm²/s at 40°C, according to ASTM standard D445 and **in that** it contains no hydrocarbons with carbon chains greater than C22.

8. Use of at least one hydrocarbon fluid according to one of claims 1 to 7 as a solvent in compositions of industrial products.

9. Use of at least one hydrocarbon fluid according to one of claims 1 to 7 as drilling fluid or in the composition of drilling mud, said hydrocarbon fluid having a boiling point comprised between 280 and 350°C.
